# NEUE EUROPÄISCHE PATENTSCHRIFT

(11) **EP 3 486 147 B2**
(45) Veröffentlichungstag und Bekanntmachung des Hinweises auf die Entscheidung über den Einspruch: **15.10.2025**
(45) Hinweis auf die Patenterteilung: 13.01.2021
(21) Anmeldenummer: 17201955.6
(22) Anmeldetag: 15.11.2017
(51) Int. Cl.: B62D 25/00, B62D 29/00

(54) **SYSTEM EINES VERSTÄRKTEN STRUKTURELEMENTS**
SYSTEM OF A REINFORCED STRUCTURAL ELEMENT
SYSTÈME D'UN ÉLÉMENT STRUCTUREL RENFORCÉ

(43) Veröffentlichungstag der Anmeldung: 22.05.2019
(73) Patentinhaber: SIKA TECHNOLOGY AG, 6340 Baar (CH)
(72) Erfinder: Belpaire, Vincent, 1180 Uccle (BE); Shehu, Ardi, 3111 Rotselaar (BE)
(74) Vertreter: Sika Patent Attorneys

(56) Entgegenhaltungen:
- EP-A1- 2 289 771
- WO-A1-01/83206
- WO-A1-03/020574

## Beschreibung

Die vorliegende Erfindung betrifft ein System eines verstärkten Strukturelementes in einem Kraftfahrzeug.

Vielfach weisen Bauelemente, wie beispielsweise Karosserien und/oder Rahmen von Transport- und Fortbewegungsmitteln, insbesondere von Fahrzeugen zu Wasser oder zu Land oder von Luftfahrzeugen, Strukturen mit Hohlräumen auf, um leichtgewichtige Konstruktionen zu ermöglichen. Diese Hohlräume verursachen jedoch verschiedenste Probleme. Je nach Art des Hohlraumes muss dieser zum Verhindern des Eindringens von Feuchtigkeit und Verschmutzungen, die zur Korrosion der Bauelemente führen können, abgedichtet werden. Oft ist es auch wünschenswert, die Hohlräume und somit das Bauelement wesentlich zu verstärken, jedoch das geringe Gewicht beizubehalten. Oft ist es auch notwendig, die Hohlräume und somit die Bauelemente zu stabilisieren, um Geräusche, die sonst den Hohlraum entlang oder durch diesen hindurch übertragen werden würden, zu reduzieren. Viele dieser Hohlräume weisen eine unregelmässige Form oder ein enges Ausmass auf, wodurch es erschwert wird, sie richtig abzudichten, zu verstärken und zu dämpfen.

Insbesondere im Automobilbau, aber auch im Flugzeug- und Bootsbau, werden deshalb Abdichtungselemente (englisch: baffle) verwendet, um Hohlräume abzudichten und/oder akustisch abzuschotten, oder Verstärkungselemente (englisch: reinforcer) verwendet, um Hohlräume zu verstärken.

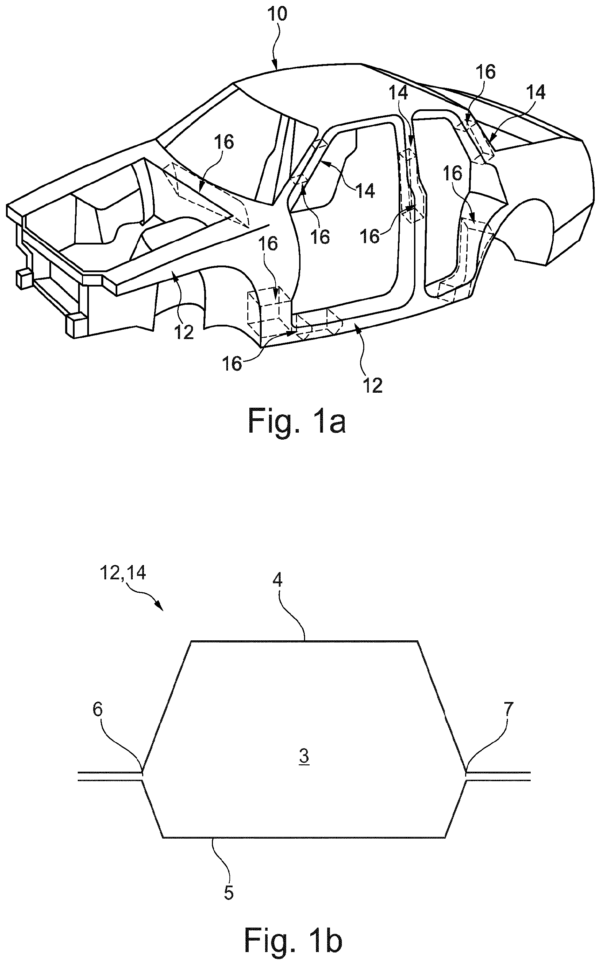

In Fig. 1a ist eine Karosserie eines Automobils schematisch dargestellt. Die Karosserie 10 weist dabei verschiedene Strukturen mit Hohlräumen, wie beispielsweise Säulen 14 und Träger bzw. Verstrebungen 12, auf. Solche Strukturelemente 12, 14 mit Hohlräumen werden üblicherweise mit Abdichtungs-und/oder Verstärkungselementen 16 abgedichtet bzw. verstärkt.

In Fig. 1b ist schematisch ein Querschnitt durch ein Strukturelement 12, 14 dargestellt. Oftmals sind bei solchen Strukturelementen 12, 14 ein erstes Blech 4 und ein zweites Blech 5 an Fügestellen 6, 7 zusammengefügt, wobei die Bleche 4, 5 zwischen den Fügestellen 6, 7 einen Hohlraum 3 ausbilden.

Zur Verstärkung solcher Strukturelemente 12, 14 mit Hohlräumen 3 wurden bereits verschiedene Ansätze vorgeschlagen. Es ist weiterhin erstrebenswert, möglichst effiziente Verstärkungselemente 16 zur Verfügung zu stellen, um Strukturelemente 12, 14 bestmöglich verstärken zu können.

Aus WO03/020574A1 ist ein anpassbares Verstärkungssystem bekannt, bei welchem zwei keilartige Elemente nebeneinander angeordnet sind.

Aus WO01/83206A1 ist ein flaches Abdämmungselement bekannt, bei welchem ein expandierbares Material im Wesentlichen auf einem Umfang des Trägers angeordnet ist.

Aus EP2289771A1 ist ein Verstärkungssystem bekannt, bei welchem der Träger Seitenflächen aufweist, welche im Wesentlichen senkrecht zueinander angeordnet sind.

Der Erfindung liegt daher die Aufgabe zugrunde, ein verbessertes System zur Verstärkung von Strukturelementen in Kraftfahrzeugen zur Verfügung zu stellen. Dabei sollen insbesondere Anforderungen, wie sie bei Bauteilen mit besonders hohen Lastfällen auftreten, besser erfüllt werden können.

Diese Aufgabe wird gelöst durch ein System eines verstärkten Strukturelementes in einem Kraftfahrzeug, wie in Anspruch 1 angegeben. Das System umfasst demzufolge ein Strukturelement und ein Verstärkungselement mit einer Längsachse, welches in einem Hohlraum des Strukturelementes anordenbar ist, wobei das Verstärkungselement Seitenwände umfasst, welche sich im Wesentlichen in Richtung der Längsachse erstrecken, wobei an einer ersten Seitenwand ein Befestigungselement zur Vorfixierung des Verstärkungselementes am Strukturelement angeordnet ist, wobei eine der ersten Seitenwand gegenüberliegende Seitenwand an einer dem Befestigungselement gegenüberliegenden Stelle eine geschlossene Oberfläche zur Verbindung mit dem Strukturelement hat. Das Verstärkungselement ist im Strukturelement angeordnet, wobei ein Klebstoff das Verstärkungselement und das Strukturelement verbindet, wobei der Klebstoff zumindest die erste Seitenwand und die gegenüberliegende Seitenwand mit dem Strukturelement verbindet und wobei der Klebstoff zudem die zweite Seitenwand mit dem Strukturelement verbindet.

Diese Lösung hat den Vorteil, dass dadurch verstärkte Strukturelementes zur Verfügung gestellt werden können, in welchen eine verbesserte Anbindung des Verstärkungselementes am Strukturelement realisiert wird. Durch die geschlossene Oberfläche gegenüber dem Befestigungselement steht grundsätzlich mehr Oberfläche des Verstärkungselementes zur Anbindung an das Strukturelement zur Verfügung.

Ein Kerngedanke der vorliegenden Erfindung ist es, ein System bereitzustellen, welches durch eine grössere Anbindungsfläche zur Verklebung mit dem Strukturelement eine insgesamt verbesserte Verstärkung des Strukturelementes ermöglicht. Es hat sich dabei gezeigt, dass Verstärkungselemente, welche grössere Anbindungsflächen aufweisen, diesen Anforderungen eher gerecht werden als Verstärkungselemente mit kleineren Anbindungsflächen.

In einer beispielhaften Ausführungsform sind die erste Seitenwand und das Befestigungselement einstückig ausgebildet.

Beispielsweise können die erste Seitenwand und das Befestigungselement in einem Spritzgussverfahren oder in einem dreidimensionalen Druckverfahren im gleichen Arbeitsschritt hergestellt werden.

In einer beispielhaften Ausführungsform ist das Befestigungselement als Clip ausgebildet.

Dies hat den Vorteil, dass dadurch eine bewährte und standardisierte Vorfixierung des Verstärkungselementes am Strukturelement zur Verfügung gestellt werden kann.

In einer beispielhaften Ausführungsform hat das Verstärkungselement ein oder zwei oder drei Befestigungselemente oder mehr als drei Befestigungselemente.

Je nach Anforderungen und Gegebenheiten kann eine geeignete Anzahl an Befestigungselementen gewählt werden.

In einer beispielhaften Ausführungsform das Befestigungselement aus demselben Material gebildet ist wie die erste Seitenwand.

In einer beispielhaften Ausführungsform bilden die Seitenwände in einem Querschnitt senkrecht zur Längsachse und beim Befestigungselement eine im Wesentlichen geschlossene Oberfläche zur Verbindung mit dem Strukturelement.

Dies hat den Vorteil, dass dadurch eine Anbindungsfläche zur Verbindung des Verstärkungselementes mit dem Strukturelement optimiert werden kann.

In einer beispielhaften Ausführungsform hat das Verstärkungselement eine Vorder- und/oder eine Rückwand, welche quer zur Längsachse angeordnet ist.

Dies hat den Vorteil, dass dadurch eine Anbindungsfläche zur Verbindung des Verstärkungselementes mit dem Strukturelement weiter vergrössert werden kann, indem auch die Vorder- und/oder Rückwand als Anbindungsfläche nutzbar ist.

In einer beispielhaften Ausführungsform umfasst das Verstärkungselement Rippen, welche zumindest zwei Seitenwände miteinander verbinden.

Solche Rippen bieten den Vorteil, dass eine mechanische Belastbarkeit des Verstärkungselementes an sich dadurch verbessert werden kann.

In einer beispielhaften Ausführungsform sind die Wände aus demselben Material gebildet.

In einer beispielhaften Ausführungsform enthält das Verstärkungselement Metall, Stahl, Aluminium, Magnesium, Kunststoff, faserverstärkten Kunststoff, Organo Sheet oder eine Kombination dieser Materialien.

Das im hier vorgeschlagenen System verwendete Verstärkungselement kann beispielsweise durch ein dreidimensionales Druckverfahren hergestellt werden.

Die eingangs gestellte Aufgabe wird demzufolge gelöst durch ein System eines verstärkten Strukturelements in einem Kraftfahrzeug gemäß Anspruch 1, das System umfassend: ein Strukturelement; ein Verstärkungselement gemäss obiger Beschreibung, wobei das Verstärkungselement im Strukturelement angeordnet ist; und einen Klebstoff, wobei der Klebstoff das Verstärkungselement und das Strukturelement miteinander verbindet.

In einer beispielhaften Ausführungsform hat der Klebstoff eine Expansionsrate von weniger als 500% oder weniger als 400% oder weniger als 300%, oder ist der Klebstoff ein nicht expandierbarer Klebstoff.

Wenig expandierbare oder nicht expandierbare Materialien bieten den Vorteil, dass dadurch der Klebstoff bei der Expansion nicht zu sehr an mechanischer Stabilität verliert. Grundsätzlich wird ein Material mechanisch schwächer, je stärker das Material expandiert wird.

Beispiele für nicht oder wenig expandierbare Klebstoffe sind insbesondere SikaReinforcer^{®}-940 oder SikaPower^{®}-497. Dabei ist SikaReinforcer^{®}-940 ein Beispiel für ein expandierbares Material, wobei SikaPower^{®}-497 ein Beispiel für ein nicht expandierbares Material ist.

Der Ausdruck "nicht expandierbar" bedeutet im Zusammenhang dieser Erfindung, dass ein Material sein Volumen nicht mehr oder weniger als 10% verändert bei den für das Material vorgesehenen Prozessschritten. Beispielsweise können nicht expandierbare Klebstoffe bei einer Aushärtung leicht schrumpfen. Eine solche Volumenveränderung bei einem Aushärten wird im Sinne dieser Anmeldung als "nicht expandierbar" betrachtet.

In einer beispielhaften Ausführungsform ist der Klebstoff durch eine Temperatur von mehr als 120° oder mehr als 140° oder mehr als 160° härtbar.

In einer weiteren alternativen Ausführungsform umfasst das System einen ersten Klebstoff und einen zweiten Klebstoff, wobei die Klebstoffe unterschiedliche Eigenschaften, insbesondere hinsichtlich einer Expansion und/oder einer Aushärtung und/oder einer Anbindungsfähigkeit und/oder einer mechanischen Belastbarkeit, haben.

In einer beispielhaften Ausführungsform ist der Klebstoff ein Klebebandklebstoff, ein Formgedächtnisklebstoff, ein einspritzbarer Klebstoff, ein spritzgegossener Klebstoff oder ein aufextrudierter Klebstoff.

Im erfindungsgemäßen System verbindet der Klebstoff zumindest die erste Seitenwand und die gegenüberliegende Seitenwand mit dem Strukturelement.

Im erfindungsgemäßen System verbindet der Klebstoff zudem die zweite und gegebenenfalls weiterhin die dritte Seitenwand mit dem Strukturelement.

In einer beispielhaften Ausführungsform bildet der Klebstoff in einem Bereich einer ersten Fügestelle und/oder in einem Bereich einer zweiten Fügestelle des Strukturelementes eine kontinuierliche Schicht, so dass das Verstärkungselement in diesem Bereich sowohl mit einem ersten Blech als auch mit einem zweiten Blech verbunden ist.

Dies ist deshalb von Vorteil, weil durch eine Verstärkung des Strukturelementes in den Bereichen der Fügestellen durch das Verstärkungselement eine Verbesserung der Verstärkung des Gesamtsystems erzielbar ist.

In einer beispielhaften Ausführungsform ist der Klebstoff hitzehärtbar und hat nach einer Härtung ein E-Modul von zumindest 100 MPa oder zumindest 150 MPa oder zumindest 200 MPa.

Einzelheiten und Vorteile der Erfindung werden im Folgenden anhand von Ausführungsbeispielen und mit Bezug auf schematische Zeichnungen beschrieben.

Es zeigen:
Fig. 1a
   schematische Darstellung einer Karosserie;
Fig. 1b
   schematische Darstellung eines Querschnittes durch ein Strukturelement;
Fig. 2a und 2b
   schematische Darstellung einer Vorrichtung gemäss Stand der Technik;
Fig. 3 und 4
   schematische Darstellung einer Vorrichtung gemäss Stand der Technik;
Fig. 5a bis 5d
   schematische Darstellung von beispielhaften Verstärkungselementen im Querschnitt; und
Fig. 6a und 6b
   schematische Darstellung eines beispielhaften Verstärkungselementes in räumlicher Ansicht.

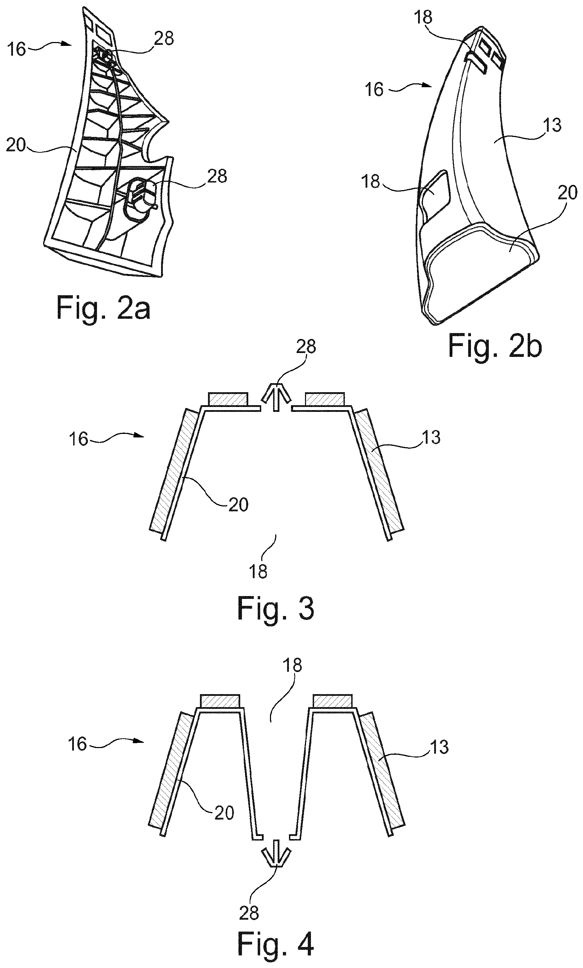

In den Fig. 2a und 2b ist eine bereits bekannte Vorrichtung 16 zur Verstärkung von Strukturelementen 12, 14 dargestellt. Die Vorrichtung 16 umfasst ein Verstärkungselement 20 und einen darauf angeordneten Klebstoff 13. Zudem hat die Vorrichtung 16 zwei Befestigungselemente 28 zur Vorfixierung der Vorrichtung 16 im Strukturelement 12, 14.

Jeweils auf der gegenüberliegenden Seitenwand der Befestigungselemente 28 hat das Verstärkungselement 20 eine Öffnung 18. Solche Öffnungen 18 sind üblich, weil dadurch das Verstärkungselement 20 in einem Spritzgussverfahren hergestellt werden kann, weil die Entformung von der Spritzgussform durch die Öffnung 18 gewährleistet ist. Nachteilig an solchen bekannten Vorrichtungen 16 ist es jedoch, dass im Bereich der Öffnungen 18 keine Anbindungsfläche für die Verbindung des Verstärkungselementes 20 mit dem Strukturelement 12, 14 zur Verfügung steht.

In den Fig. 3a bis 4b sind verschiedene Querschnitte durch ein System 1 eines verstärkten Strukturelementes 12, 14 dargestellt. Dabei ist jeweils ein Verstärkungselement 20 in einem Hohlraum 3 des Strukturelementes 12, 14 angeordnet. Das Verstärkungselement 20 ist dabei durch Klebstoff 13 mit dem Strukturelement 12, 14 verbunden.

In den Fig. 3 und 4 sind weitere Vorrichtungen 16 gemäss dem Stand der Technik dargestellt, diesmal jeweils im Querschnitt. Dabei haben die Verstärkungselemente 20 jeweils an einer Seitenwand, welche der Seitenwand mit dem Befestigungselement 28 gegenüberliegt, eine Öffnung 18.

Das Verstärkungselement 20 in Fig. 3 hat einen C-förmigen Querschnitt, und das Verstärkungselement 20 in Fig. 4 hat einen W-förmigen bzw. M-förmigen Querschnitt.

In den Beispielen gemäss den Figuren 2a und 2b sowie 3 und 4 ist der Klebstoff 13 jeweils als expandierbarer Klebstoff ausgebildet, welcher auf dem Verstärkungselement 20 angeordnet ist (beispielsweise durch Zweikomponenten Spritzguss).

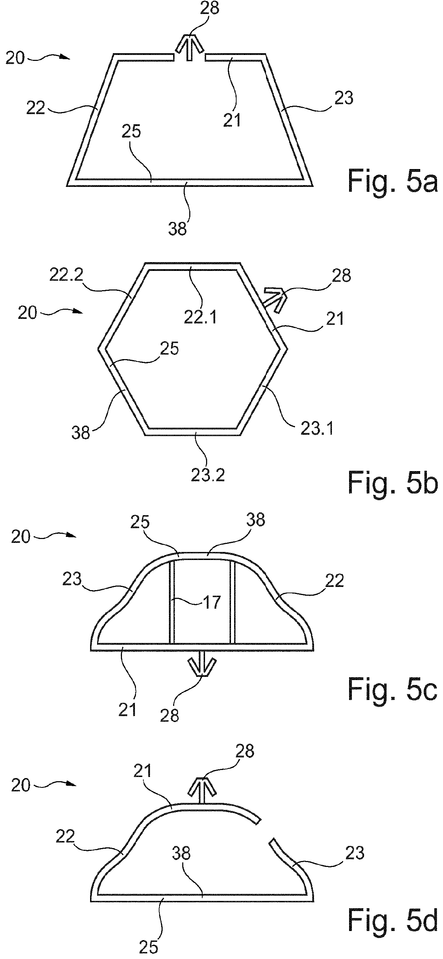

In den Fig. 5a bis 5d sind nun vier verschiedene Verstärkungselemente schematisch dargestellt, die im erfindungsgemäßen System verwendet werden können. In diesen hat eine der ersten Seitenwand 21 gegenüberliegende Seitenwand 25 zumindest an einer dem Befestigungselement 28 gegenüberliegenden Stelle 38 eine geschlossene Oberfläche zur Verbindung mit dem Strukturelement.

In Fig. 5a hat das Verstärkungselement 20 einen viereckigen Querschnitt.

In Fig. 5b hat das Verstärkungselement 20 einen sechseckigen Querschnitt, wobei die zweite Seitenwand 22 und die dritte Seitenwand 23 jeweils in Teilwände 22.1, 22.2, 23.1, 23.2 untergliedert sind.

In Fig. 5c hat das Verstärkungselement 20 einen unregelmässig geformten Querschnitt. Dabei ist die erste Seitenwand 21 eben ausgebildet, und die übrigen Seitenwände 22, 23, 25 sind wellenförmig ausgebildet. In diesem Ausführungsbeispiel hat das Verstärkungselement 20 in einem Innern Rippen 17.

In Fig. 5d hat das Verstärkungselement 20 wiederum einen unregelmässig geformten Querschnitt. Dabei ist die der erste Seitenwand 21 gegenüberliegende Seitenwand 25 eben ausgebildet, und die übrigen Seitenwände 21, 22, 23 sind wellenförmig ausgebildet. In diesem Ausführungsbeispiel hat die dritte Seitenwand 23 eine Öffnung, sodass der Querschnitt des Verstärkungselementes 20 nicht vollständig geschlossen ist.

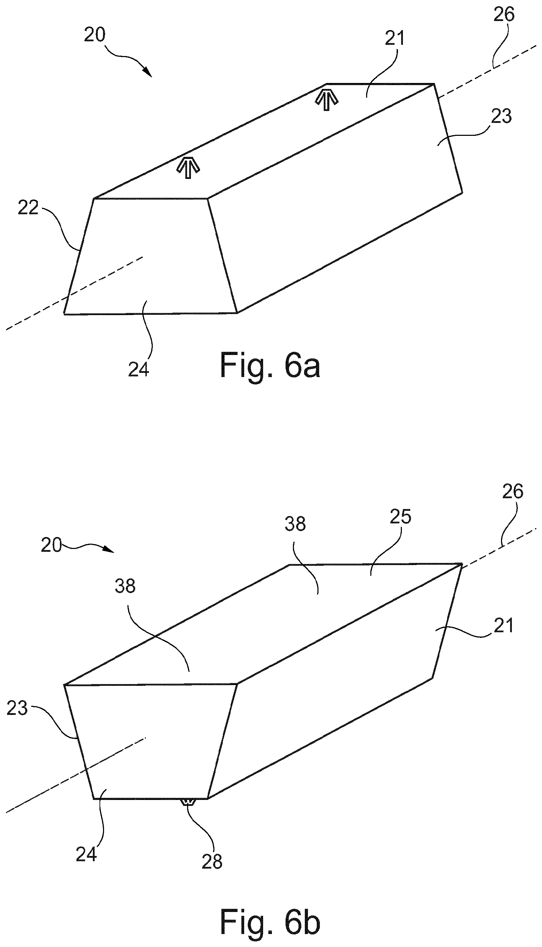

In den Fig. 6a und 6b ist ein weiteres Ausführungsbeispiel eines Verstärkungselementes 20 in räumlicher Darstellung schematisch gezeigt, das für die Herstellung eines erfindungsgemäßen Systems verwendet werden kann. In diesem Beispiel hat das Verstärkungselement 20 zwei Befestigungselement 28, welche beide auf der ersten Seite 21 angeordnet sind. Die der ersten Seitenwand 21 gegenüberliegende Seitenwand 25 hat dabei an den den Befestigungselementen 28 gegenüberliegenden Stellen 38 eine geschlossene Oberfläche. Somit steht eine grössere Anbindungsfläche zur Verbindung des Verstärkungselementes 20 mit dem Strukturelement 12, 14 zur Verfügung.

Die Seitenwände 21, 22, 23, 25 sind entlang einer Längsachse 26 des Verstärkungselementes 26 angeordnet.

In diesem Ausführungsbeispiel hat das Verstärkungselement 20 einen viereckigen Querschnitt.

### Bezugszeichenliste

- 1: System
- 3: Hohlraum
- 4: Erstes Blech
- 5: Zweites Blech
- 6: Erste Fügestelle
- 7: Zweite Fügestelle
- 10: Karosserie
- 11: Verstärkungselement
- 12: Strukturelement
- 13: Klebstoff
- 14: Strukturelement
- 16: Vorrichtung
- 17: Rippe
- 18: Öffnung
- 20: Verstärkungselement
- 21: Erste Seitenwand
- 22: Zweite Seitenwand
- 23: Dritte Seitenwand
- 24: Vorder-/Rückwand
- 25: Gegenüberliegende Seitenwand
- 26: Längsachse
- 28: Befestigungselement
- 38: Stelle gegenüber des Befestigungselementes

## Patentansprüche

1. System (1) eines verstärkten Strukturelements in einem Kraftfahrzeug, das System umfassend:
- ein Strukturelement (12, 14);
- ein Verstärkungselement (20) mit einer Längsachse (26), welches in einem Hohlraum des Strukturelementes anordenbar ist, wobei das Verstärkungselement (20) Seitenwände (21, 22, 23, 25) umfasst, welche sich in Richtung der Längsachse (26) erstrecken,
wobei an einer ersten Seitenwand (21) ein Befestigungselement (28) zur Vorfixierung des Verstärkungselementes (20) am Strukturelement (12, 14) angeordnet ist,
wobei eine der ersten Seitenwand (21) gegenüberliegende Seitenwand (25) an einer dem Befestigungselement (28) gegenüberliegenden Stelle (38) eine geschlossene Oberfläche zur Verbindung mit dem Strukturelement (12, 14) hat, und dass das Verstärkungselement (20) eine Vorder- und eine Rückwand (24) hat, welche quer zur Längsachse (26) angeordnet ist, und dass das Verstärkungselement (20) Rippen (17) umfasst, welche zumindest zwei Seitenwände (21, 22, 23, 25) miteinander verbinden;
wobei das Verstärkungselement (20) im Strukturelement (12, 14) angeordnet ist; und
- einen Klebstoff (13), wobei der Klebstoff (13) das Verstärkungselement (20) und das Strukturelement (12, 14) miteinander verbindet;
wobei der Klebstoff (13) zumindest die erste Seitenwand (21) und die gegenüberliegende Seitenwand (25) mit dem Strukturelement (12, 14) verbindet, und wobei der Klebstoff (13) zudem eine zweite Seitenwand (22) mit dem Strukturelement (12, 14) verbindet.

2. System nach Anspruch 1, wobei die erste Seitenwand (21) und das Befestigungselement (28) einstückig ausgebildet sind.

3. System nach Anspruch 1 oder 2, wobei das Befestigungselement (28) als Clip ausgebildet ist.

4. System nach einem der vorhergehenden Ansprüche, wobei das Verstärkungselement (20) ein oder zwei oder drei Befestigungselemente (28) hat.

5. System nach einem der vorhergehenden Ansprüche, wobei das Befestigungselement (28) aus demselben Material gebildet ist wie die erste Seitenwand (21).

6. System nach einem der vorhergehenden Ansprüche, wobei die Seitenwände (21, 22, 23, 25) in einem Querschnitt senkrecht zur Längsachse (26) und beim Befestigungselement (28) eine im Wesentlichen geschlossene Oberfläche zur Verbindung mit dem Strukturelement (12, 14) bilden.

7. System nach einem der vorhergehenden Ansprüche, wobei die Seitenwände (21, 22, 23, 25) aus demselben Material gebildet sind.

8. System nach einem der vorhergehenden Ansprüche, wobei das Verstärkungselement (20) Metall, Stahl, Aluminium, Magnesium, Kunststoff, faserverstärkter Kunststoff, Organo Sheet, oder eine Kombination dieser Materialien enthält.

9. System (1) nach einem der Ansprüche 1 bis 8, wobei der Klebstoff (13) ein nicht expandierbarer Klebstoff ist.

10. System (1) nach einem der Ansprüche 1 bis 8, wobei der Klebstoff (13) ein expandierbarer Klebstoff ist.

11. System (1) nach Anspruch 10, wobei der Klebstoff (13) eine Expansionsrate von weniger als 500 % hat.

12. System (1) nach einem der vorhergehenden Ansprüche, wobei der Klebstoff (13) hitzehärtbar ist, und wobei der Klebstoff (13) nach einer Härtung ein E-Modul von zumindest 100 MPa hat.

## Claims

1. System (1) of a reinforced structural element in a motor vehicle, the system comprising:
- a structural element (12, 14);
- a reinforcing element (20) which has a longitudinal axis (26) and can be arranged in a cavity of the structural element, wherein the reinforcing element (20) comprises side walls (21, 22, 23, 25), which extend in the direction of the longitudinal axis (26),
wherein a fastening element (28) for the preliminary fixing of the reinforcing element (20) on the structural element (12, 14) is arranged on a first side wall (21),
wherein, at a location (38) opposite the fastening element (28), a side wall (25) located opposite the first side wall (21) has a closed surface for connecting to the structural element (12, 14), and in that the reinforcing element (20) has a front and a rear wall (24), arranged transversely in relation to the longitudinal axis (26), and in that the reinforcing element (20) comprises ribs (17), which connect at least two side walls (21, 22, 23, 25) to one another;
wherein the reinforcing element (20) is arranged in the structural element (12, 14); and
- an adhesive (13), wherein the adhesive (13) connects the reinforcing element (20) and the structural element (12, 14) to one another;
wherein the adhesive (13) connects at least the first side wall (21) and the opposite side wall (25) to the structural element (12, 14), and wherein the adhesive (13) additionally connects a second side wall (22) to the structural element (12, 14).

2. System according to Claim 1, wherein the first side wall (21) and the fastening element (28) are formed in one piece.

3. System according to Claim 1 or 2, wherein the fastening element (28) is designed in the form of a clip.

4. System according to one of the preceding claims, wherein the reinforcing element (20) has one or two or three fastening elements (28).

5. System according to one of the preceding claims, wherein the fastening element (28) is formed from the same material as the first side wall (21).

6. System according to one of the preceding claims, wherein, in a cross section which is perpendicular to the longitudinal axis (26) and at the fastening element (28), the side walls (21, 22, 23, 25) form an essentially closed surface for connecting to the structural element (12, 14).

7. System according to one of the preceding claims, wherein the side walls (21, 22, 23, 25) are formed from the same material.

8. System according to one of the preceding claims, wherein the reinforcing element (20) contains metal, steel, aluminium, magnesium, plastic, fibre-reinforced plastic, organo sheet, or a combination of these materials.

9. System (1) according to one of Claims 1 to 8, wherein the adhesive (13) is a non-expandable adhesive.

10. System (1) according to one of Claims 1 to 8, wherein the adhesive (13) is an expandable adhesive.

11. System (1) according to Claim 10, wherein the adhesive (13) has an expansion rate of less than 500%.

12. System (1) according to one of the preceding claims, wherein the adhesive (13) is heat-curable, and wherein, following a curing operation, the adhesive (13) has a modulus of elasticity of at least 100 MPa.

## Revendications

1. Système (1) d'un élément structural renforcé dans un véhicule automobile, le système comprenant :
- un élément structural (12, 14) ;
- un élément de renforcement (20) présentant un axe longitudinal (26), qui peut être agencé dans une cavité de l'élément structural, l'élément de renforcement (20) comprenant des parois latérales (21, 22, 23, 25) qui s'étendent dans la direction de l'axe longitudinal (26), un élément de fixation (28) pour la préfixation de l'élément de renforcement (20) à l'élément structural (12, 14) étant agencé au niveau d'une première paroi latérale (21),
une paroi latérale (25) opposée à la première paroi latérale (21) présentant, au niveau d'un emplacement (38) opposé à l'élément de fixation (28), une surface fermée pour la liaison à l'élément structural (12, 14) et en ce que l'élément de renforcement (20) présente une paroi avant et une paroi arrière (24) qui est agencée transversalement par rapport à l'axe longitudinal (26) et en ce que l'élément de renforcement (20) comprend des membrures (17) qui relient au moins deux parois latérales (21, 22, 23, 25) l'une à l'autre ;
l'élément de renforcement (20) étant agencé dans l'élément structural (12, 14) ; et
- un adhésif (13), l'adhésif (13) reliant l'élément de renforcement (20) et l'élément structural (12, 14) l'un à l'autre ;
l'adhésif (13) reliant au moins la première paroi latérale (21) et la paroi latérale (25) opposée à l'élément structural (12, 14) et l'adhésif (13) reliant en outre une deuxième paroi latérale (22) à l'élément structural (12, 14).

2. Système selon la revendication 1, dans lequel la première paroi latérale (21) et l'élément de fixation (28) sont réalisés d'une seule pièce.

3. Système selon la revendication 1 ou 2, dans lequel l'élément de fixation (28) est réalisé sous forme de clip.

4. Système selon l'une des revendications précédentes, dans lequel l'élément de renforcement (20) présente un, deux ou trois éléments de fixation (28).

5. Système selon l'une des revendications précédentes, dans lequel l'élément de fixation (28) est formé du même matériau que celui de la première paroi latérale (21).

6. Système selon l'une des revendications précédentes, dans lequel les parois latérales (21, 22, 23, 25) forment, dans une section transversale perpendiculaire à l'axe longitudinal (26) et au niveau de l'élément de fixation (28), une surface sensiblement fermée pour la liaison à l'élément structural (12, 14).

7. Système selon l'une des revendications précédentes, dans lequel les parois latérales (21, 22, 23, 25) sont formées du même matériau.

8. Système selon l'une des revendications précédentes, dans lequel l'élément de renforcement (20) contient un métal, de l'acier, de l'aluminium, du magnésium, un matériau synthétique, un matériau synthétique renforcé par des fibres, une tôle organique ou une combinaison de ces matériaux.

9. Système (1) selon l'une des revendications 1 à 8, dans lequel l'adhésif (13) est un adhésif non expansible.

10. Système (1) selon l'une des revendications 1 à 8, dans lequel l'adhésif (13) est un adhésif expansible.

11. Système (1) selon la revendication 10, dans lequel l'adhésif (13) présente un taux d'expansion inférieur à 500%.

12. Système (1) selon l'une des revendications précédentes, dans lequel l'adhésif (13) est thermodurcissable et dans lequel l'adhésif (13) présente, après durcissement, un module élastique d'au moins 100 MPa.
